# EUROPEAN PATENT SPECIFICATION

(11) **EP 1 291 322 B1**
(45) Date of publication and mention of the grant of the patent: **18.05.2005**
(21) Application number: 02079620.7
(22) Date of filing: 04.02.1999
(51) Int. Cl.: C02F 1/44, B01D 61/36, A61K 9/00

(54) **Process for increasing the moisture content in a dehydrated matter**
Verfahren zur Erhöhung des Feuchtigkeitsgehalts in einem getrockneten Material
Procédé pour augmenter la teneur en humidité dans une matière déshydratée

(30) Priority: 05.02.1998 US 19287
(43) Date of publication of application: 12.03.2003
(62) Divisional of application: 99905665.8
(73) Proprietor: E.I. DU PONT DE NEMOURS AND COMPANY, Wilmington, Delaware 19898 (US); Design Technology & Innovation Limited, Croydon CR0 0YN (GB)
(72) Inventor: Tonkin Mark Christopher, Lewes, Sussex BN8 6AP (GB); Young Mark Andrew, Hertfordshire HP1 1SZ (GB); Kirchner Olaf Norbert, Wilmington DE 19807 (US)
(74) Representative: Carpmaels & Ransford

(56) References cited:
- WO-A-95/03033
- US-A- 4 725 481
- US-A- 4 832 690

## Description

### BACKGROUND

### 1. Field of the Invention

This invention relates to a process for increasing the moisture content of a dehydrated matter, and specifically relates to the use of a hydrophilic membrane in an apparatus that allows the direct use of pure or impure water for rehydration.

### 2. Description of the Related Art

There are known processes for purifying water, and the type of process used depends on the nature and amount of the impurities in the water. For example, impurities in particulate form and in solution may both need to be removed from the water. The aim is to purify the water so that it contains sufficiently low amounts of suspended particles, suspended microbes and dissolved salts to meet the quality requirements of water for drinking, for the production of food and drink, for agricultural irrigation and for industrial use.

Processes for the purification of water are usually classified as filtration, distillation or reverse osmosis. In conventional particle filtration processes, impurities in particulate form, such as suspended inorganic particles, are removed using porous constructions such as woven or non-woven fabrics. In cases where very small particles must be filtered, polymer membranes are used which are microporous, that is, the membranes have very small holes through which the particulates to be filtered cannot pass.

Aqueous solutions containing dissolved salts are usually purified by reverse osmosis or distillation. When the aqueous solution is in the form of seawater or brackish water, these processes are generally known as desalination. The process of reverse osmosis relies on applying pressure to solutions of ions across a semipermeable membrane. If the applied pressure is greater than the osmotic pressure of the solution, purified water is collected from the side of the membrane not in contact with the solution. Reverse osmosis membranes let water pass through them but reject the passage of salt ions. In reality a small percentage, say 1%, of sea salts pass through the membranes. US Patent No. 5,547,586 discloses a method to desalinate seawater and brackish water utilizing an enzyme-assisted membrane. As opposed to reverse osmosis, distillation methods using seawater or brackish water can yield water with a very low amount of suspended particles and dissolved solids. However, the high latent heat of vaporization of water means that distillation processes require a high input of energy and therefore generally operate at a higher cost compared to reverse osmosis processes.

It has been known from US Patent 4,725,481 that a copolyetherester elastomer can be used, on its own or as a part of a bicomponent film of a hydrophobic layer and a hydrophilic layer of copolyetherester elastomers bonded together, to permit the differential transfer of water vapor to prevent buildup of moisture such as in a surgical drape or in waterproof apparel equipment.

US 4,832,690 discloses a cartridge for drug delivery comprising a housing containing a drug-containing bag having walls of a hydrophilic material capable of diffusing water across the walls. The walls also define macroscopic holes. Dissolved drugs pass out of the bag through the microscopic holes for removal of use.

### SUMMARY OF THE INVENTION

The present invention generally relates to a process for increasing the moisture content of a dehydrated matter, said process comprising:
providing a water source containing water and at least one of a suspended solid, a dissolved solid, a pollutant, a salt, and a biological material,
providing a water delivery system comprising a hydrophilic membrane comprising one or more layers, wherein the hydrophilic membrane is a hydrophilic polymer selected from a copolyetherester elastomer, a polyether-block-polyamide, a polyether urethane, a homopolymer of polyvinyl alcohol, a copolymer of polyvinyl alcohol, and mixtures thereof, and wherein said hydrophilic membrane prevents the at least one suspended solid, dissolved solid, pollutant, salt, and biological material from passing through the hydrophilic membrane, said water being permitted to pass through the hydrophilic membrane as water vapor, wherein said hydrophilic membrane has a differential transfer rate of water vapor across said layer of at least 70 g/m²/24h, further wherein said dehydrated matter is sealed inside the hydrophilic membrane, and
introducing the water delivery system to the water source, wherein the water vapor permitted to pass through the hydrophilic membrane increases the moisture content of the dehydrated matter at a rate dependent on the hygroscopicity of the dehydrated matter.

The layer or layers of hydrophilic membranes may be present either in the form of an unsupported structure or coated on or adhered to a support material.

A preferred hydrophilic membrane layer is made from a hydrophilic polymer having a water vapor transmission rate according to ASTM E96-95 (Procedure BW) of at least 400 g/m²/24h, measured using air at 23°C and 50% relative humidity at a velocity of 3 m/s on a film of total thickness 25 microns. A more preferred hydrophilic membrane layer is made from a hydrophilic polymer having a water vapor transmission rate according to ASTM E96-95 (Procedure BW) of at least 3500 g/m²/24h, measured using air at 23°C and 50% relative humidity at a velocity of 3 m/s on a film of total thickness 25 microns.

### DETAILED DESCRIPTION

The present invention generally relates to a method for the controlled release of water by pervaporation, by passing water vapor contained in air, or liquid water that may contain suspended or dissolved impurities, including but not limited to seawater, brackish water or other kinds of polluted water, through one or more layers of hydrophilic membrane to remove impurities from the water. The layer or layers of hydrophilic membrane may be present either in the form of an unsupported structure or coated on or adhered to a support material.

Pervaporation is the process wherein a given solvent permeates into a non-porous membrane or coating, is transported across the membrane and is subsequently released from the opposite face of the membrane or coating in the form of vapor. Pervaporation is therefore different from known filtration, distillation or reverse osmosis processes in that the product is a vapor and not a liquid. If the solvent is water, non-porous hydrophilic membranes are suitable for pervaporation, because water is readily absorbed by, transported across and released from such a membrane. This water vapor can then be used for applications such as providing moisture to hydrate dry matter or to rehydrate dehydrated matter.

### Hydrophilic Membranes

"Hydrophilic membranes" means non-porous membranes that absorb water, i.e., that allow water to pass through. If there is a humidity gradient across the hydrophilic membrane, this absorbed water may diffuse through the thickness of the membrane and may be emitted from its opposite face. Hydrophilic membranes or coatings, hereinafter collectively referred to as membranes in this disclosure, feature suffciently high water vapor transmission rates, as defined below, so that water that has passed through the membranes can be used directly in applications including but not limited to irrigating plants and rehydrating food, drinks, drugs and the like. Such membranes can comprise one or more individual layers made from materials including but not limited to the same or different hydrophilic polymers. As long as the water vapor permeation rate of the membrane in total is sufficiently high, this water can be provided at a rate consistent with its use in a given practical application as described. The non-porous nature of the membranes disclosed here serves to exclude any particulate impurities from passing through such a membrane, including microbes such as bacteria and viruses. In addition, it has been discovered that membranes made from the hydrophilic polymers described in the present invention significantly reduce or prevent the passage of dissolved salts. Therefore, the ability to use not only freshwater, but also water that may contain suspended or dissolved impurities, to produce desired amounts of purified water by pervaporation allows saline water, including but not limited to seawater or brackish water, after processing through the water delivery system, to be used, for the controlled release of water into an environment.

The rate at which water pervaporates through the membrane made from the hydrophilic polymer depends, among other factors, upon the moisture content on the non-water side.

The pervaporation of water through the membrane is sufficient to rehydrate dried foods, pharmaceutical products and the like, irrespective of whether the water on the opposite face of the membrane is freshwater or water that may contain suspended or dissolved impurities.

### Water Vapor Transmission Characteristics

The standard test for measuring the rate at which a given membrane transmits water is ASTM E-96-95 - Procedure BW, previously known and named as ASTM E-96-66 - Procedure BW, which is used to determine the Water Vapor Transmission Rate (WVTR) of a membrane. For this test, an assembly is used based on a water-impermeable cup, also called a "Thwing-Albert Vapometer". This cup contains water to about ¾ ± ¼ in. (19 ± 6 mm) from top. The opening of the cup is sealed watertight with a water-penuieable membrane of the test material to be measured, leaving an air gap between the water surface and the membrane. In Procedure BW, the cup is then inverted, so that water is in direct contact with the membrane. The apparatus is placed in a test chamber at a controlled temperature and humidity, and air is then blown across the outside of the membrane at a specified velocity. Experiments are run in duplicate. The weights ofthe cup, water and membrane assemblies are measured over several days and results are averaged. The rate at which water permeates through the membrane is quoted as its "Water Vapor Transmission Rate," measured as the average weight loss of the assembly at a given membrane thickness, temperature, humidity and air velocity, expressed as mass loss per unit membrane surface area and time. The WVTR of membranes or films according to ASTM E96-95 Method BW is typically measured on a film of thickness of 25 microns and at an air flow rate of 3 m/s, air temperature of 23°C and 50% relative humidity.

### Hydrophilic Polymers

In the context of this disclosure, the hydrophilic membranes for use with the process of the invention are made from hydrophilic polymers. "Hydrophilic polymers" mean polymers which absorb water when in contact with liquid water at room temperature according to the International Standards Organization specification ISO 62 (equivalent to the American Society for Testing and Materials specification ASTM D 570).

The hydrophilic polymer can be one or a blend of several polymers, for example, the hydrophilic polymer can be a copolyetherester elastomer or a mixture of two or more copolyetherester elastomers as described below, such as polymers available from E.I. du Pont de Nemours and Company under the trade name Hytrel®; or a polyether-block-polyamide or a mixture of two or more polyether-block-polyamides, such as polymers available from the Elf-Atochem Company of Paris, France under the trade name of PEBAX; or a polyether urethane or a mixture of polyether urethanes; or homopolymers or copolymers of polyvinyl alcohol or a mixture of homopolymers or copolymers of polyvinyl alcohol.

A particularly preferred polymer for water vapor transmission in this invention is a copolyetherester elastomer or mixture of two or more copolyetherester elastomers having a multiplicity of recurring long-chain ester units and short-chain ester units joined head-to-tail through ester linkages, where the long-chain ester units are represented by the formula: 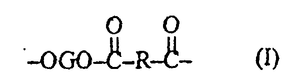 and said short-chain ester units are represented by the formula: 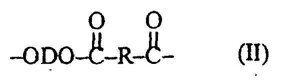 wherein:
a) G is a divalent radical remaining after the removal of terminal hydroxyl groups from a poly(alkylene oxide)glycol having a number average molecular weight of about 400-4000;
b) R is a divalent radical remaining after removal of carboxyl groups from a dicarboxylic acid having a molecular weight less than 300;
c) D is a divalent radical remaining after removal of hydroxyl groups from a diol having a molecular weight less than about 250; optionally
d) the copolyetherester contains 0-68 weight percent based on the total weight of the copolyetherester, ethylene oxide groups incorporated in the long-chain ester units of the copolyetherester; and
e) the copolyetherester contains about 25-80 weight percent short-chain ester units.

This preferred polymer is suitable for fabricating into thin but strong membranes, films and coatings. The preferred polymer, copolyetherester elastomer and methods of making it are known in the art, such as are disclosed in US Patent No. 4,725,481 for a copolyetherester elastomer with a WVTR of 3500 g/m²/24 hr, or US Patent No. 4,769,273 for a copolyetherester elastomer with a WVTR of 400-2500 g/m²/24 hr.

The polymer can be compounded with antioxidant stabilizers, ultraviolet stabilizers, hydrolysis stabilizers, dyes or pigments, fillers, anti-microbial reagents, and the like.

The use of commercially available hydrophilic polymers as membranes is possible in the context of the present invention, although it is more preferable to use copolyetherester elastomers having a WVTR of more than 400 g/m²/24h measured on a film of thickness 25 microns using air at 23°C and 50% relative humidity at a velocity of 3 m/s. Most preferred is the use of membranes made from commercially available copolyetherester elastomers having a WVTR of more than 3500 g/m²/24h, measured on a film of thickness 25 microns using air at 23°C and 50% relative humidity at a velocity of 3 m/s.

### Method For Making The Hydrophilic Polymer Membranes

The hydrophilic polymers can be manufactured into membranes of any desired thickness by a number of processes. A useful and well-established way to make membranes in the form of films is by melt extrusion of the polymer on a commercial extrusion line. Briefly, this entails heating the polymer to a temperature above the melting point, extruding it through a flat or annular die and then casting a film using a roller system or blowing a film from the melt.

Useful support materials include woven, non-woven or bonded papers, fabrics and screens permeable to water vapor, including those constructed from fibers of organic and inorganic polymers stable to moisture such as polyethylene, polypropylene, fiberglass and the like. The support material both increases strength and protects the membrane. The support material may be disposed on only one side of the hydrophilic polymer membrane or both sides. When disposed on only one side, the support material can be in contact with the source of water or away from it. Typically the support material is disposed on the outside of containers formed by the hydrophilic polymer membrane to best protect the membrane from physical damage and / or degradation by light.

The water delivery system, employing the hydrophilic polymer membrane, is not limited to any particular form or shape, and can be, by way of illustration, a bag, a film, a pipe, a tube or the like.

### Applications of the Invention

Without being bound to any particular theory, it is believed that the purifying effect identified as the principal inventive concept of the hydrophilic membrane, realized either in the form of a coating or an unsupported membrane, when in contact with water that may contain suspended or dissolved impurities and solids, occurs because highly dipolar molecules such as water are preferentially absorbed and transported across the membrane or coating, compared to ions such as sodium and chloride. When, in addition, a humidity gradient exists across the membrane, water is released from the side not in contact with the source water, and can be absorbed by an article to be hydrated or rehydrated.

***Hydration or Rehydration.*** The method of pervaporation through the membrane and the water purification apparatus can be used to hydrate or rehydrate materials such as food or pharmaceutical or agricultural compositions. The dry or dehydrated materials can be carried in sealed pouches comprising the hydrophilic membrane, and then hydrated or rehydrated using water vapor contained in air, or liquid water that may contain suspended or dissolved impurities, including but not limited to seawater, brackish water or other kinds of polluted water.

In summary, pervaporation though the water purification apparatus can be used to purify water to hydrate or rehydrate dried foods, pharmaceuticals and the like.

The present invention can be operated at a lower cost and with less equipment infrastructure, compared to the prior art systems. Because the apparatus for providing moisture to the air space of an enclosed chamber emits water in the form of water vapor instead of liquid water, the pressure of impure water supplied to the membrane layer of the apparatus can be much less than the 2500 kPa typically required for purification of seawater using reverse osmosis. The pressure is even less than the lower pressures required for reverse osmosis of less saline brines. Generally, the applied pressure differential over ambient atmosphenc pressure is less than about 1000 kPa. Although high pressures may increase the rate at which the membrane layer emits water vapor, excessive pressure can shift the self-regulating equilibrium to cause the growing medium to become too wet. Furthermore, high pressures require thick membranes or preferably strong supporting materials to contain the pressure.

Therefore, the applied pressure is typically less than about 250 kPa, and very often less than about 100 kPa. Most often the applied pressure is little or no more than that provided by the weight of the water itself, or the pressure needed to flush impure water through the water purification apparatus, as this allows the use of thin hydrophilic membranes or films of the hydrophilic polymer.

### Examples

In the examples that follow, Copolyetherester A is a polymer made according to the method disclosed in US Patent No. 4,725,481 starting from 30 parts of dimethyl terephthalate, 57 parts of a poly(alkylene)glycol the alkylene content of which comprises of 65% ethylene and 35% propylene, 9 parts of dimethyl isophthalate, 16 parts of butanediol (stoichiometric amount) and 0.7 parts of trimethyl trimellitate. Copolyetherester A contains about 37% by weight of poly(ethylene oxide)glycol, and the membranes made from Copolyethetester A feature a water swell of around 54% by weight at room temperature and a WVTR of at least 10,000 g/m²/24h, measured on a film of thickness 25 microns using air at 23°C and 50% relative humidity at a velocity of 3 m/s.

Copolyetherester B is a polymer made according to the method disclosed in US Patent No. 4,725,481 starting from 44 parts of dimethyl terephthalate, 51 parts of a poly(alkylene)glycol the alkylene content of which comprises of 65% ethylene and 35% propylene, 19 parts of butanediol (stoichiometric amount) and 0.4 parts of trimethyl trimellitate. Copolyetherester B contains about 33% by weight of poly(ethylene oxide) glycol, and the membranes made from Copolyetherester B feature a water swell of around 30% by weight at room temperature and a WVTR of at least 10,000 g/m²/24h, measured on a film of thickness 25 microns using air at 23°C and 50% relative humidity at a velocity of 3 m/s.

Copolyetherester C is a polymer made according to the method disclosed in US Patent No. 4,725,481 starting from 50 parts of dimethyl terephthalate, 44 parts of a poly(alkylene)glycol the alkylene content of which comprises of 85% propylene and 15% ethylene, 21 parts of butanediol (stoichiometric amount) and 0.3 parts of trimethyl trimellitate. The membranes made from Copolyetherester C feature a water swell of around 5% by weight at room temperature and a WVTR of 2,200 g/m²/24h, measured on a film of thickness 25 microns using air at 23°C and 50% relative humidity at a velocity of 3 m/s.

### EXAMPLES 1 - 10

The first set of examples, Examples 1-10 are provided for illustration only. These Examples do not fall within the scope of the invention. These Examples demonstrate that water vapor passes through the hydrophilic membranes of the water purification apparatus, and that the hydrophilic membranes let water pass through them but reject the passage of salt ions. In the examples, five hyorophilic membrane bags made from an extruded film of the hydrophilic polymer Copolyetherester A were filled with seawater, and five hydrophilic membrane bags were made from an extruded film of another hydrophilic polymer Copolyetherester B were filled with tap water. A heat sealer was used to seal the hydrophilic membrane bags closed. The bags had a maximum effective surface area calculated as 0.1 m².

The bags were placed in a room at ambient temperature and uncontrolled humidity. Samples 2, 3, 5, 7, 8 and 9 were placed directly on the metal tray. Samples 1 and 10 were laid on tissue paper on the tray and samples 4 and 6 were placed on nylon mesh to indicate possible effects of air flow or 'wicking', which would affect the rate at which water vapor was removed from the surface. As soon as the bags were filled, the surface of the bags became damp to the touch. The bags were completely sealed and the upper surface of each bag was exposed to air.

The bags were weighed and visually inspected every day over a period of one week, and the measured weight decreased daily until at between five and seven days all the bags were empty of water. In this first case, as the test was an empirical indicator, it was difficult to take into account all the factors such as original mass of water, type of water, surface area, water contact area and thickness of film. However, taking all these considerations into account, there was no apparent difference in the rate of 'water loss' for a similar surface area.

The now empty bags which had originally contained seawater were found to have a white salty deposit inside, visible as large crystals. The bag in Example 5, for instance, contained in excess of 20 g of solids. Under ambient pressure and temperature, in excess of 2 liters of water per square meter per day pervaporated through the bags. Other measurements suggested that Copolyetherester A was capable of passing more than one liter of water per square meter per hour, given a sufficiently fast flow of air across the surface of the hydrophilic membrane to remove the water vapor as it was emitted from the bag by pervaporation. It is believed that natural evaporation rate of the water was the limiting factor in the flow of water through the bag. Hydrophilic membrane bag samples 1 and 10, which were placed on paper tissue, and hydrophilic membrane bag samples 4 and 6, which were placed on nylon mesh, did not release water any faster than hydrophilic membrane bags that had been placed directly on a metal tray. There was also no noticeable difference between the thicker and thinner films of polymer.

The results of the examples are summarized in Table 1 below.

**TABLE 1**

| Pervaporation of Water through Sealed Hydrophilic Membrane Bags | | | | |
|---|---|---|---|---|
| Example | Polymer type | Membrane thickness (microns) | Water source | Starting mass (g) |
| 1 | Copolyetherester B | 100 | Sea | 493 |
| 2 | Copolyetherester B | 100 | Sea | 418 |
| 3 | Copolyetherester B | 100 | Tap | 488 |
| 4 | Copolyetherester A | 100 | Sea | 509 |
| 5 | Copolyetherester A | 100 | Sea | 551 |
| 6 | Copolyetherester A | 100 | Tap | 441 |
| 7 | Copolyetherester A | 50 | Sea | 260 |
| 8 | Copolyetherester A | 50 | Tap | 515 |
| 9 | Copolyetherester B | 50 | Tap | 338 |
| 10 | Copolyetherester B | 50 | Tap | 380 |

### EXAMPLE 11

Example 11 demonstrates a rehydration application. In this Example, dehydrated solids were rehydrated. Two samples each of dried baby milk, sugar (sucrose) or table salt (sodium chloride) were placed in separately sealed hydrophilic membrane pouches made from Copolyetherester A. The pouches were placed under water, one sample each under fresh water and one sample each under seawater. The contents were observed to rehydrate rapidly. The speed of rehydration varied, depending upon the different amounts of hygroscopicity of the powders. The specific benefit of providing dehydrated solids in pouches from the hydrophilic membranes used in accordance with the invention is that the user need not carry potable water, since the food can be rehydrated from impure water sources.

It will be appreciated by the skilled addressee that the term purification is somewhat dependent upon the use to which the purified water is to be put. For example, water to be used for growing plants may be less pure than that required for human consumption. Of course, it will be appreciated that the purification process can be repeated in successive stages to enhance purity, i.e., allowing the pollutant water to pass through one or more thicker layer of hydrophilic membranes (or even through an additionat filtration system). Furthermore, purity may refer to different components depending upon the context of use. For example, in water for (re-)hydrating drugs for intravenous injection, the total biological load and the salt content will be highly relevant. Thus, purification should be understood to refer to the process of preparing water of sufficient quality for its intended use. Generally, within the context of the invention, purified water released from the membrane will contain about less 1% (preferably less than 0.1% and lower) dissolved or suspended solids and particulate matters. In relation to dissolved salts, these are generally retained in and on the membrane, with purified vapor released from the membrane having a purity of less than about 1% (and typically lower) in relation to dissolved solids.

## Claims

1. A process for increasing the moisture content of a dehydrated matter, said process comprising:
providing a water source containing water and at least one of a suspended solid, a dissolved solid, a pollutant, a salt, and a biological material,
providing a water delivery system comprising a hydrophilic membrane comprising one or more layers, wherein the hydrophilic membrane is a hydrophilic polymer selected from a copolyetherester elastomer, a polyether-block-polyamide, a polyether urethane, a homopolymer of polyvinyl alcohol, a copolymer of polyvinyl alcohol, and mixtures thereof, and wherein said hydrophilic membrane prevents the at least one suspended solid, dissolved solid, pollutant, salt, and biological material from passing through the hydrophilic membrane, said water being permitted to pass through the hydrophilic membrane as water vapor, wherein said hydrophilic membrane has a differential transfer rate of water vapor across said layer of at least 70 g/m²/24h,further wherein said dehydrated matter is sealed inside the hydrophilic membrane, and
introducing the water delivery system to the water source, wherein the water vapor permitted to pass through the hydrophilic membrane increases the moisture content of the dehydrated matter at a rate dependent on the hygroscopicity of the dehydrated matter.

2. The process according to claim 1, wherein the hydrophilic polymer is a copolyetherester elastomer, or mixture thereof, comprising a multiplicity of recurring long-chain ester units and a multiplicity of recurring short chain ester units, said long-chain ester units and short-chain ester units being joined head-to-tail by ester linkages, wherein the long-chain ester units have the general formula 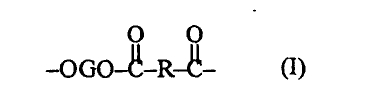 wherein:
a) G is a divalent radical remaining after terminal hydroxyl groups are removed from a poly(alkylene oxide)glycol having a number average molecular weight of about 400-4000;
b) R is a divalent radical remaining after carboxyl groups are removed from a dicarboxylic acid having a molecular weight less than 300;
wherein the short-chain ester units have the general formula 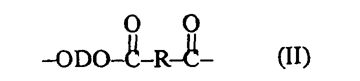 wherein:
a) D is a divalent radical remaining after hydroxyl groups are removed from a diol having a molecular weight less than about 250;
b) R is a divalent radical remaining after carboxyl groups are removed from a dicarboxylic acid having a molecular weight less than 300;
wherein the copolyetherester optionally contains from 0 to 68 wt.% ethylene oxide groups based on the total weight of the copolyetherester, said ethylene oxide groups being contained in the long-chain ester units; and
wherein the copolyetherester contains from about 25 to 80 wt.% of said short-chain ester units.

3. The process according to claim 2, wherein the copolyetherester elastomer has a water vapor transmission rate according to ASTM E96-95 (procedure BW) of at least 400 g/m²/24hour measured on a film thickness of 25 microns using air at a temperature of 23°C and having a relative humidity of 50% and at an air velocity of 3 m/s.

4. The process according to claim 2, wherein the copolyetherester elastomer has a water vapor transmission rate according to ASTM E96-95 (procedure BW) of at least 3500 g/m²/24hours measured on a film thickness of 25 microns using air at a temperature of 23°C and having a relative humidity of 50% and at an air velocity of 3 m/s.

## Patentansprüche

1. Verfahren zur Erhöhung des Feuchtigkeitsgehalts eines entwässerten Materials, wobei das Verfahren umfaßt:
Bereitstellen eines Wasserausgangsstoffes, enthaltend Wasser und mindestens eines von einem suspendierten Feststoff, einem gelösten Feststoff, einem Schadstoff, einem Salz und einem biologischen Material,
Bereitstellen eines Wasserzuführungssystems, umfassend eine hydrophile Membran, umfassend eine oder mehrere Schichten, wobei die hydrophile Membran ein hydrophiles Polymer, ausgewählt aus einem Copolyetheresterelastomer, einem Polyetherblockpolyamid, einem Polyetherurethan, einem Homopolymer von Polyvinylalkohol, einem Copolymer von Polyvinylalkohol und Gemischen davon, ist und wobei die hydrophile Membran verhindert, daß der mindestens eine suspendierte Feststoff, gelöste Feststoff, Schadstoff, das Salz und das biologische Material durch die hydrophile Membran hindurchgehen, wobei dem Wasser gestattet wird, als Wasserdampf durch die hydrophile Membran hindurchzugehen, wobei die hydrophile Membran eine differentielle Übertragungsrate für Wasserdampf durch die Schicht von mindestens 70 g/m²/24h hat, wobei weiterhin das entwässerte Material im Inneren der hydrophilen Membran verschlossen ist, und
Einführen des Wasserzuführungssystems in den Wasserausgangsstoff, wobei der Wasserdampf, dem gestattet wird, durch die hydrophile Membran hindurchzugehen, den Feuchtigkeitsgehalt des entwässerten Materials mit einer Rate abhängig von der Hygroskopizität des entwässerten Materials erhöht.

2. Verfahren nach Anspruch 1, wobei das hydrophile Polymer ein Copolyetheresterelastomer oder ein Gemisch davon, umfassend eine Vielzahl von wiederkehrenden langkettigen Estereinheiten und eine Vielzahl von wiederkehrenden kurzkettigen Estereinheiten, ist, wobei die langkettigen Estereinheiten und die kurzkettigen Estereinheiten Kopf-an-Schwanz durch Esterbindungen verbunden sind, wobei die langkettigen Estereinheiten die allgemeine Formel 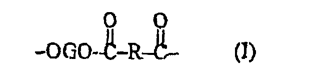 haben, wobei:
a) G ein zweiwertiger Rest ist, verbleibend, nachdem endständige Hydroxylgruppen von einem Poly(alkylenoxid)glycol mit einem zahlenmittleren Molekulargewicht von etwa 400-4000 entfernt sind;
b) R ein zweiwertiger Rest ist, verbleibend, nachdem Carboxylgruppen von einer Dicarbonsäure mit einem Molekulargewicht von weniger als 300 entfernt sind;
wobei die kurzkettigen Estereinheiten die allgemeine Formel 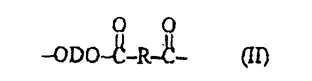 haben, wobei:
a) D ein zweiwertiger Rest ist, verbleibend, nachdem Hydroxylgruppen von einem Diol mit einem Molekulargewicht von weniger als etwa 250 entfernt sind;
b) R ein zweiwertiger Rest ist, verbleibend, nachdem Carboxylgruppen von einer Dicarbonsäure mit einem Molekulargewicht von weniger als 300 entfernt sind;
wobei der Copolyetherester gegebenenfalls von 0 bis 68 Gew.-% Ethylenoxidgruppen, bezogen auf das Gesamtgewicht des Copolyetheresters, enthält, wobei die Ethylenoxidgruppen in den langkettigen Estereinheiten enthalten sind; und
wobei der Copolyetherester von etwa 25 bis 80 Gew.-% der kurzkettigen Estereinheiten enthält.

3. Verfahren nach Anspruch 2, wobei das Copolyetheresterelastomer eine Wasserdampfdurchlässigkeitsrate entsprechend ASTM E96-95 (Verfahren BW) von mindestens 400 g/m²/24 Stunden, gemessen an einer Foliendicke von 25 Mikrometern unter Verwendung von Luft bei einer Temperatur von 23°C und mit einer relativen Feuchtigkeit von 50% und bei einer Luftgeschwindigkeit von 3 m/s, hat.

4. Verfahren nach Anspruch 2, wobei das Copolyetheresterelastomer eine Wasserdampfdurchlässigkeitsrate entsprechend ASTM E96-95 (Verfahren BW) von mindestens 3500 g/m²/24 Stunden, gemessen an einer Foliendicke von 25 Mikrometern unter Verwendung von Luft bei einer Temperatur von 23°C und mit einer relativen Feuchtigkeit von 50% und bei einer Luftgeschwindigkeit von 3 m/s, hat.

## Revendications

1. Procédé d'augmentation de la teneur en humidité d'une matière déshydratée, ledit procédé comprenant:
la proposition d'une source d'eau contenant de l'eau et au moins un élément choisi parmi un solide en suspension, un solide dissous, un polluant, un sel, et un matériau biologique,
la proposition d'un système de fourniture d'eau comprenant une membrane hydrophile comprenant une ou plusieurs couche(s), dans lequel la membrane hydrophile est un polymère hydrophile choisi parmi un élastomère copolyétherester, un polyéther-polyamide séquencé, un polyéther uréthane, un homopolymère de poly(alcool de vinyle), un copolymère de poly(alcool de vinyle), et les mélanges de ceux-ci, et dans lequel ladite membrane hydrophile empêche le au moins un solide en suspension, solide dissous, polluant, sel, et matériau biologique de passer à travers la membrane hydrophile, ladite eau étant autorisée à passer à travers la membrane hydrophile sous la forme de vapeur d'eau, dans lequel ladite membrane hydrophile a un débit différentiel de transfert de vapeur d'eau à travers ladite couche d'au moins 70 g/m²/24 heures, et en outre dans lequel ladite matière déshydratée est hermétiquement enfermée à l'intérieur de la membrane hydrophile, et
l'introduction du système de fourniture d'eau au niveau de la source d'eau, dans lequel la vapeur d'eau autorisée à passer à travers la membrane hydrophile augmente la teneur en humidité de la matière déshydratée à une vitesse dépendant de la capacité hygroscopique de la matière déshydratée.

2. Procédé selon la revendication 1, dans lequel le polymère hydrophile est un élastomère copolyétherester, ou mélange de celui-ci, comprenant une multitude de motifs ester récurrents à longue chaîne et une multitude de motifs ester récurrents à courte chaîne, lesdits motifs ester à longue chaîne et motifs ester à courte chaîne étant joints tête-à-queue par des liaisons ester, dans lequel les motifs ester à longue chaîne ont la formule générale 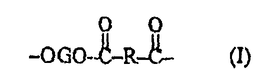 dans laquelle:
a) G représente un radical divalent restant après que les groupes hydroxyle terminaux soient éliminés d'un poly(oxyde d'alkylène)glycol ayant un poids moléculaire moyen en nombre d'environ 400 à 4000;
b) R représente un radical divalent restant après que les groupes carboxyle soient éliminés d'un acide dicarboxylique ayant un poids moléculaire inférieur à 300;
dans lequel les motifs ester à courte chaîne ont la formule générale 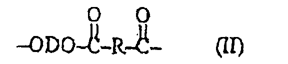 dans laquelle:
a) D représente un radical divalent restant après que les groupes hydroxyle soient éliminés d'un diol ayant un poids moléculaire inférieur à environ 250;
b) R représente un radical divalent restant après que les groupes carboxyle soient éliminés d'un acide dicarboxylique ayant un poids moléculaire inférieur à 300;
dans lequel le copolyétherester contient éventuellement de 0 à 68% en pds de groupes oxyde d'éthylène basés sur le poids total du copolyétherester, lesdits groupes oxyde d'éthylène étant contenus dans les motifs ester à longue chaîne; et
dans lequel le copolyétherester contient d'environ 25 à 80% en pds desdits motifs ester à courte chaîne.

3. Procédé selon la revendication 2, dans lequel l'élastomère copolyétherester a un débit de transmission de vapeur d'eau selon la norme ASTM E96-95 (procédure BW) d'au moins 400 g/m²/24 heures mesuré sur une épaisseur de film de 25 microns en utilisant de l'air à une température de 23°C et ayant une humidité relative de 50% et à une vitesse d'écoulement de l'air de 3 m/s.

4. Procédé selon la revendication 2, dans lequel l'élastomère copolyétherester a un débit de transmission de vapeur d'eau selon la norme ASTM E96-95 (procédure BW) d'au moins 3500 g/m²/24 heures mesuré sur une épaisseur de film de 25 microns en utilisant de l'air à une température de 23°C et ayant une humidité relative de 50% et à une vitesse d'écoulement de l'air de 3 m/s.
